**Europäisches Patentamt**

**European Patent Office**

**Office européen des brevets**

(19)

(11) Veröffentlichungsnummer : **0 154 835 B1**

# (12) EUROPÄISCHE PATENTSCHRIFT

(45) Veröffentlichungstag der Patentschrift :
06.07.88

(21) Anmeldenummer : 85101664.2

(22) Anmeldetag : 15.02.85

(51) Int. Cl.⁴ : **C 08 J   3/06, C 08 J   3/10, C 08 L 61/02, C 09 D   3/66, C 09 D   3/76 // (C08L67/08, 61:02),(C08L57/00, 61:02)**

(54) **Verfahren zur Herstellung wässriger Keton-Harz- oder Keton/Aldehyd-Harz-Dispersionen und deren Verwendung.**

(30) Priorität : 23.02.84 DE 3406474

(43) Veröffentlichungstag der Anmeldung :
18.09.85 Patentblatt 85/38

(45) Bekanntmachung des Hinweises auf die Patenterteilung : 06.07.88 Patentblatt 88/27

(84) Benannte Vertragsstaaten :
AT BE CH DE FR GB IT LI NL SE

(56) Entgegenhaltungen :
DE-C-   733 369
FR-E-     81 271
US-A- 3 130 172

(73) Patentinhaber : BASF Aktiengesellschaft
Carl-Bosch-Strasse 38
D-6700 Ludwigshafen (DE)

(72) Erfinder : Fischer, Kurt
Mundenheimer Strasse 168
D-6700 Ludwigshafen (DE)
Erfinder : Petersen, Harro, Dr.
Kalmitstrasse 23
D-6710 Frankenthal (DE)
Erfinder : Kasch, Hellmuth, Dipl.-Ing.
Rheinecke 2
D-6700 Ludwigshafen (DE)
Erfinder : Wistuba, Eckehardt, Dr.
Im Obergarten 7
D-6702 Bad Duerkheim (DE)

**Beschreibung**

Die vorliegende Erfindung betrifft ein Verfahren zur Herstellung stabiler wäßriger Keton-Harz-Dispersionen und deren Verwendung in Kombination mit verschiedenen Filmbildnern, wie wäßrigen Lösungen und/oder Dispersionen von Alkydharzen- und/oder Polymerisaten $\alpha,\beta$-ethylenisch ungesättigter Verbindungen.

Keton-Harze sind schon seit langem bekannt. Ihre Herstellung erfolgt im allgemeinen durch alkalikatalysierte Kondensation von cycloaliphatischen Ketonen, wie Cyclohexanon oder dessen Derivaten. Geeignete Herstellverfahren sind beispielsweise in DE-C-337 993, DE-C-357 091, DE-C-511 092 bzw. DE-C-749 836 und DE-C-339 107 oder in der DE-A-28 31 613 beschrieben.

Ketonharze eignen sich in Kombination mit hochmolekularen Filmbildnern, wie z. B. Cellulosederivaten, Chlorkautschuk, Mischpolymerisaten auf Vinylester-, Vinylether-, Vinylchlorid-, Vinylaromaten-, Acrylester-Basis oder chemisch trocknenden Bindemitteln, wie z. B. Alkydharzen, trocknenden und halbtrocknenden Ölen zur Herstellung von Lacken.

Die Harze werden dazu im allgemeinen mit den in der Lacktechnik üblichen Lösungs- und Verdünnungsmitteln, wie Alkoholen, Ketonen, Estern, aliphatischen und aromatischen Kohlenwasserstoffen, wie z. B. Testbenzin, Hexan, Toluol, Xylol und anderen Hilfsmitteln verarbeitet.

In der FR-E-81 271 wird ein Verfahren zur Herstellung stabiler Dispersionen durch Mischen von wäßrigen Dispersionen von Copolymerisaten aus $\alpha,\beta$-ungesättigten Monomeren mit Dispersionen von reaktionsfähigen Harzen, wie Epoxid-, Polyester- oder Keton-Harzen beschrieben. Als Keton-Harze werden Keton-Formaldehyd-Harze genannt, die wegen ihrer Methylolgruppen zu hydrophil für manche Anwendungen sind und die beim Einbrennen von daraus hergestellten Lacken in unerwünschter Weise Formaldehyd abspalten können.

Aufgabe der vorliegenden Erfindung ist es, Keton-Harze auch anderen Einsatzgebieten zugänglich zu machen und gleichzeitig eine umweltfreundlichere Verarbeitung dieser Harze zu ermöglichen. Außerdem sollten Glanz, Füllkraft und Härte der Lackfilme verbessert werden.

Es wurde gefunden, daß man stabile wäßrige Dispersionen von feinverteilten, wasserunlöslichen Keton-Harzen herstellen kann, indem man die Schmelze oder hochkonzentrierte Lösungen der Keton-Harze in Gegenwart von organischen Schutzkolloiden gegebenenfalls unter Zusatz von Emulgatoren in Wasser dispergiert.

Gegenstand der vorliegenden Erfindung ist ein Verfahren zur Herstellung von stabilen wäßrigen Dispersionen von Keton-Harzen, das dadurch gekennzeichnet ist, daß man die Harzschmelze oder hochkonzentrierte Lösungen von Keton-Harzen in Gegenwart von organischen Schutzkolloiden, gegebenenfalls unter Zusatz von Emulgatoren in Wasser dispergiert.

Vorzugsweise werden erfindungsgemäß als organische Schutzkolloide Copolymerisate aus Vinyllactamen und Vinylestern oder carboxylgruppenhaltige (Meth)acrylsäureestercopolymerisate, deren Carboxylgruppen zumindest teilweise neutralisiert sind, verwendet.

Gegenstand der vorliegenden Anmeldung ist außerdem die Verwendung der erfindungsgemäß hergestellten wäßrigen Keton-Harz-Dispersionen in Kombination mit anderen Filmbildnern, insbesondere in Kombination mit wäßrigen Lösungen und/oder Dispersionen von Alkydharzen und/oder Polymerisaten $\alpha,\beta$-ethylenisch ungesättigter Verbindungen als Lackbindemittel.

Zum erfindungsgemäßen Verfahren und den dafür in Frage kommenden Aufbaukomponenten ist im einzelnen folgendes auszuführen.

Als Ketonharze kommen für das erfindungsgemäße Verfahren die oben bereits genannten Kondensationsprodukte von cycloaliphatischen Ketonen, wie z. B. von Cyclohexanon oder dessen Derivaten, wie z. B. Methylcyclohexanon und p-tert.-Butylcyclohexanon in Betracht. Diese Harze können in üblicher Weise aus den cycloaliphatischen Ketonen oder Gemischen dieser Ketone durch alkalikatalysierte Kondensation erhalten werden und weisen im allgemeinen Erweichungspunkte (nach DIN 53 180) zwischen 70 und 130 °C, vorzugsweise zwischen 80 und 100 °C auf.

Erfindungsgemäß werden die Keton-Harze in geschmolzener Form oder in Form ihrer hochkonzentrierten, 75 bis 95 %igen Lösungen in Wasser dispergiert, das organisches Schutzkolloid sowie gegebenenfalls zusätzlich Emulgatoren enthält.

Als Lösungsmittel für die Harzlösungen kommen beispielsweise in Frage Alkanole mit 1 bis 12, vorzugsweise 2 bis 10 Kohlenstoffatomen, wie Ethanol, Isopropanol, Butanole, wie n-Butanol und/oder Isobutanol, 2-Ethylhexanol, i-Decanol sowie Gemische der genannten Alkohole. Ebenso eignen sich Glykolmono-$C_1$- bis $C_4$-alkylether, wie z. B. Butyl-ethylenglykol, $C_1$- bis $C_4$-Alkylglykolester, Diethylenglykolmono-$C_1$- bis $C_4$-alkylether, Dipropylenglykolmono-$C_1$- bis $C_4$-alkylether sowie deren Mischungen, Aromaten, wie Toluol und Xylol sowie Testbenzin.

Geeignete organische Schutzkolloide sind Copolymerisate aus Vinyllactamen und Vinylestern sowie Polymerdispersionen auf Acrylester/(Meth)acrylsäure-Basis genügender Wasserlöslich- bzw. Wasserquellbarkeit.

Besonders geeignet sind Copolymerisate aus Vinylestern von 1 bis 4 Kohlenstoffatome enthaltenden Carbonsäuren, wie Vinylformiat, Vinylacetat, Vinylpropionat, Vinylbutyrat mit N-Vinylamiden, wie Vinylpyrrolidon und/oder Vinylcaprolactam. Bevorzugt eignen sich Copolymerisate des Vinylpyrrolidons mit Vinylacetat und/oder Vinylpropionat, insbesondere solche, die Vinylpyrrolidon und Vinylester im Molverhältnis 1 : 1,2 bis 1 : 0,2 einpolymerisiert enthalten, z. B. Copolymerisate aus ca. 66 Teilen N-Vinylpyrrolidon und ca. 34 Teilen Vinylpropionat mit K-Werten (nach DIN 51 562) von 40 bis 45, die beispielsweise als etwa 30 %ige wäßrige Lösungen im Handel sind.

Ebenso eignen sich als organische Schutzkolloide Copolymerisate aus olefinisch ungesättigten, hydrophile Gruppen, wie Hydroxyl-, Carboxyl-, Amid- und/oder Amino-Gruppen enthaltenden Monomeren und anderen copolymerisierbaren olefinisch ungesättigten organischen Verbindungen, wie z. B. Estern der Acrylsäure oder Methacrylsäure mit 1 bis 12, vorzugsweise 1 bis 4 Kohlenstoffatomen enthaltenden Alkoholen, wie Ethyl-(meth)acrylat, Propyl-(meth)acrylat, Butandioldiacrylat, Hexandioldiacrylat, Diethylaminoethylacrylat, Vinylestern von 1 bis 12, vorzugsweise 2 bis 4 Kohlenstoffatome enthaltenden Carbonsäuren, wie Vinylacetat und/oder Vinylpropionat, Vinylethern von 1 bis 12, vorzugsweise 2 bis 4 Kohlenstoffatome enthaltenden Alkoholen, wie Vinylethylether, Vinylisobutylether, Vinylaromaten, wie Styrol und/oder Vinyltoluol oder Vinylcyclohexen sowie Gemischen dieser Monomeren.

Die olefinisch ungesättigten, hydrophile Gruppen, wie Hydroxyl-, Carboxyl-, Amid- und/oder Amino-Gruppen enthaltenden Monomeren sind in den Copolymerisaten in solchen Mengen einpolymerisiert, daß die Copolymerisate — im Falle der Carboxylgruppen enthaltenden Copolymerisate nach zumindest teilweiser Neutralisation mit Alkali, Ammoniak oder organischen Aminen — wasserlöslich oder zumindest gleichmäßig wasserquellbar sind.

Als Hydroxylgruppen enthaltende copolymerisierbare olefinisch ungesättigte Monomere eignen sich z. B. Hydroxyalkylacrylate oder Hydroxyalkylmethacrylate mit 2 bis 12 Kohlenstoffatomen in der Alkylgruppe, wie Hydroxyethyl(meth)acrylat Hydroxypropyl(meth)acrylat, Hydroxybutyl(meth)acrylat oder deren Gemische.

Als carboxylgruppenhaltige copolymerisierbare olefinisch ungesättigte Monomere eignen sich z. B. olefinisch ungesättigte Mono- und Dicarbonsäuren wie Acrylsäure, Methacrylsäure, Crotonsäure, Maleinsäure, Maleinsäurehalbester von Monoalkanolen mit 1 bis 4 Kohlenstoffatomen, Itaconsäure, Itaconsäurehalbester sowie deren Gemische, wobei Acrylsäure und Methacrylsäure bevorzugt sind.

Als amidgruppenhaltige copolymerisierbare olefinisch ungesättigte Monomere eignen sich beispielsweise Acrylamid, Methacrylamid oder deren Derivate, wie N-Alkyl-(meth)-acrylamid, N-Alkoxymethyl-(meth)-acrylamid mit 1 bis 4 Kohlenstoffatomen in der Alkyl- bzw. Alkoxygruppe und/oder N-Hydroxymethyl-(meth)-acrylamid.

Die erfindungsgemäß zu verwendenden organischen Schutzkolloide weisen im allgemeinen K-Werte (nach DIN 51 562) in wäßriger Lösung zwischen 5 und 100, vorzugsweise zwischen 10 und 50 auf.

Bevorzugte organische Schutzkolloide der letztgenannten Gruppe sind zumindest teilweise neutralisierte carboxylgruppenhaltige Copolymerisate, insbesondere Copolymerisate aus Acrylestern oder Methacrylestern, die teilweise durch Styrol ersetzt sein können, mit $\alpha,\beta$-olefinisch ungesättigten 3 bis 5 Kohlenstoffatome enthaltenden Carbonsäuren, wie Acrylsäure, Methacrylsäure, Maleinsäure oder Itaconsäure, wobei die Carbonsäure im allgemeinen in Mengen von 10 bis 60, insbesondere 25 bis 40 Gew.%, bezogen auf Gesamtgewicht des Copolymerisats einpolymerisiert ist. Beispiele für derartige bevorzugte Copolymerisate sind solche aus Acrylsäureethylester und Acrylsäure und/oder Methacrylsäure, die vor der Neutralisation als 25 %ige wäßrige Dispersion einen pH-Wert von etwa 2 aufweisen.

Als gegebenenfalls mitzuverwendende Emulgatoren kommen insbesondere nichtionische Emulgatoren in Betracht, die gegebenenfalls teilweise, d. h. bis 50 Gew.% durch ionische Emulgatoren, wie Paraffin-(Olefin)-sulfonate oder sulfatierte oxethylierte Alkylphenole mit 8 bis 9 C-Atomen in der Alkylgruppe und 5 bis 40 Ethylenoxideinheiten oder Fettsäure-triethanolaminester ersetzt sein können.

Als nichtionische Emulgatoren kommen beispielsweise Ethylenoxid- oder Propylenoxidaddukte von Fettalkoholen, z. B. von Talgfettalkohol oder $C_{12}$- bis $C_{14}$-Fettalkoholen in Frage. Bevorzugt sind derartige Ethylenoxidaddukte mit 5 bis 50, vorzugsweise 8 bis 25 Ethylenoxideinheiten pro Fettalkohol.

Andere mitverwendbare nichtionische Emulgatoren sind z. B. Ethylenoxidaddukte von Alkylphenolen mit 4 bis 18 C-Atomen in der Alkylgruppe oder oxethylierte Fettsäuren (Stearinsäure, Ölsäure) mit 5 bis 20 Ethylenoxid-Einheiten sowie Ricinusöl mit 5 bis 40 Ethylenoxid-Einheiten. Geeignet sind auch teilweise verseifte Polyvinylacetate bzw. Polyvinylalkohole, wasserlösliche Cellulosederivate oder Polyvinylpyrrolidone mit K-Wert 25 bis 100 (z. B. ®Luviskol K) und/oder verseifte Vinylacetat/Vinylpyrrolidon-Copolymeri-sate mit 50 % Pyrrolidongehalt mit K-Wert 20 bis 40.

Zur Durchführung des erfindungsgemäßen Verfahrens werden die Keton-Harze als Schmelze oder in hochkonzentrierter Lösung mit dem schutzkolloidhaltigen Wasser, das gegebenenfalls noch einen Emulgatorzusatz enthält, vermischt. Dies kann bei Temperaturen zwischen 40 und 100 °C unter Rühren oder unter Zuführen anderer Bewegungsenergie, beispielsweise durch Dispergieren mit Ultra-Turax oder durch Umwälzen über Düsen erfolgen.

Das organische Schutzkolloid wird dem als Dispersionsmedium dienenden Wasser im allgemeinen in Mengen von 0,1 bis 20, vorzugsweise 1 bis 5 Gew.%, bezogen auf Festharz (= Keton-Harz), zugefügt.

An Emulgatoren können 0 bis 20, vorzugsweise 0,1 bis 5 Gew.%, bezogen auf Festharz zugesetzt werden.

Das erfindungsgemäße Verfahren kann in üblichen Mischaggregaten, beispielsweise in einem Rührbehälter durchgeführt werden.

Man erhält nach dem erfindungsgemäßen Verfahren stabile wäßrige, feinteilige (mittlerer Teilchendurchmesser etwa 0,1 bis 10 μm) Dispersionen mit Feststoffgehalten von 30 bis 70 Gew.%, die gute Lagerstabilität aufweisen und sich sehr vorteilhaft mit anderen filmbildenden Lackbindemitteln auf wäßriger Basis, beispielsweise wäßrigen Alkydharzlösungen oder wäßrigen Polymerdispersionen verarbeiten lassen.

Als wäßrige Alkydharzlösungen bzw. -dispersionen eignen sich die üblicherweise in der Technik verwendeten Produkte. Es können z. B. wasserverdünnbare kurzölige, mittelölige oder langölige Alkydharze, z. B. solche auf Basis Ricinenalkydharz, die mit Triethanolamin neutralisiert in 55 %iger wäßriger Lösung vorliegen, oder mittelölige Alkydharze auf Basis von trocknenden Fettsäuren, die isocyanatmodifiziert sind, verwendet werden.

Geeignete wäßrige Polymerdispersionen sind beispielsweise Primärdispersionen von Copolymerisaten von Styrol/Butadien, Styrol/(Meth-)acrylsäure-$C_1$- bis $C_{12}$-alkylester, (Meth-)acrylsäure-$C_1$- bis $C_{12}$-alkylester, Vinylester, wie Vinylacetat und Vinylpropionat sowie Vinylester/(Meth-)acrylsäureester. Diese Copolymerisate können weitere Monomere mit OH-, COOH- und/oder —$CONH_2$-Gruppen einpolymerisiert enthalten, wobei letztere im allgemeinen in untergeordneten Mengen von 1 bis zu 10, vorzugsweise 2 bis 5 Gew.% einpolymerisiert sein können. Derartige Primärdispersionen sind z. B. in Houben-Weyl, Methoden der organischen Chemie, Band 14/1 (1961), Seiten 186 ff beschrieben und weisen im allgemeinen Feststoffgehalte von etwa 30 bis 65, vorzugsweise 45 bis 55 Gew.% auf.

Die erfindungsgemäß hergestellten Keton-Harz-Dispersionen können je nach den gewünschten Eigenschaften der Lackierung in Mengen von 2 bis 50, vorzugsweise 5 bis 20 Gew.%, bezogen fest/fest mit den Alkydharzlösungen oder Polymerdispersionen kombiniert und gegebenenfalls nach Zusatz von Pigmenten, Füllstoffen, Farbstoffen, Verlaufsmittel (wie z. B. solchen auf Siliconöl-Basis), Härtungskatalysatoren (wie z. B. Co-, Pb- und/oder Mn-Octoate und/oder -Naphthenate, z. B. ®Soligen Co, Pb, Mn) und anderen Hilfsmitteln, die jeweils in für diese Zusatzstoffe üblichen Mengen zugefügt werden können, auf die zu überziehenden Substrate nach üblichen Verfahren, z. B. durch Streichen, Tauchen, Spritzen, Walzen, Gießen oder Rollen aufgetragen und getrocknet bzw. durch Erhitzen auf 80 bis 150 °C eingebrannt werden. Als zu überziehende Substrate eignen sich Metalle, Holzwerkstoffe, Papier, Kunststoffe und mineralische Untergründe.

Die so hergestellten Lackierungen zeichnen sich durch verbesserten Glanz sowie verbesserte Härte und Füllkraft aus.

Die in den folgenden Beispielen genannten Teile und Prozente sind, soweit nicht anders angegeben, Gewichtsteile und Gewichtsprozente.

## Beispiel 1

500 Teile eines Ketonharzes auf Basis von Cyclohexanon mit einem Erweichungspunkt von ca. 80 °C (DIN 53180) werden unter Rühren bei 80 °C in 40 Teilen Isobutanol gelöst. Die homogene Harzlösung wird auf 70 °C abgekühlt und innerhalb von ca. 90 Minuten mit einer Mischung aus 200 Teilen einer 15 %igen wäßrigen Lösung eines Copolymerisats aus N-Vinylpyrrolidon und Vinylpropionat im Gewichtsverhältnis 2 : 1 mit einem K-Wert von 43, z. B. ®Collacral VL (15 %ig) und 50 Teilen eines hochoxethylierten Talgfettalkohols, z. B. ®Emulan OG (20 %ig) versetzt. Nach beendetem Eintragen der Schutzkolloid-Lösung läßt man 20 Minuten bei 65 °C nachrühren und tropft dann im Verlauf von ca. 90 Minuten bei 60 bis 65 °C 230 Teile Wasser zu. Anschließend wird unter Rühren auf Raumtemperatur abgekühlt. Man erhält 1015 Teile einer stabilen Harzdispersion mit einem Feststoffgehalt von 52,5 %.

## Beispiel 2

Kombination der Ketonharz-Dispersion mit verschiedenen Filmbildehilfsmitteln :
Eine nach Beispiel 1 hergestellte Ketonharz-Dispersion verfilmt bei Temperaturen von 50 bis 80 °C. Die Filmbildung wird durch Zusatz von Filmbildehilfsmitteln wie Alkylglykolen, z. B. Butylglykol, Alkylglykolestern, z. B. Butylglykolacetat, aromatischen Kohlenwasserstoffen, z. B. Xylol sowie aliphatischen Kohlenwasserstoffen, z. B. Testbenzin, die in Mengen von 5 bis 20 % zugesetzt werden, verbessert. Zusätze von Butylglykol in Mengen von 5 bis 20 % ermöglichen die Verfilmung bei Raumtemperatur.

Kenndaten der Dispersion :

Feststoffgehalt : 52 %
Auslaufzeit DIN 4-Becher 23 °C : 75 sec
Mindestfilmbildetemperatur : 50 °C

In Tabelle 1 sind die Filmbildeeigenschaften, Mindestfilmbildetemperaturen, Viskositäten sowie Filmhärte der Dispersion mit verschiedenen Filmbildehilfsmitteln (Ethylglykolacetat, Xylol, Butylglykol, Testbenzin) dargestellt.

(Siehe Tabelle 1 Seite 5 f.)

Tabelle 1

| Teile Dispersion/ Teile Filmbilde- hilfsmittel | Filmbildung bei RT | 50°C | 120°C | Auslaufzeit DIN 4 Becher 23°C | Filmhärte (Pendel- dämpfung nach König) [sec] | Mindest- filmbilde- temperatur (°C) |
|---|---|---|---|---|---|---|
| Ethylenglykol- acetat | 0 | + | + | 84 | 108 | 19 |
| 9:1 | 0 | + | + | 84 | 108 | 19 |
| 8:2 | 0 | + | + | 108 | 69 | 16 |
| Xylol | | | | | | |
| 9:1 | 0 | + | + | 127 | 69 | 20 |
| 8:2 | 0 | + | + | 206 | 58 | 16 |
| Butylglykol | | | | | | |
| 9:1 | + | + | + | 78 | 50 | 13 |
| 8:2 | + | + | + | 111 | 42 | 11 |
| Testbenzin | | | | | | |
| 9:1 | 0 | + | + | 120 | 78 | 13 |
| 8:2 | 0 | + | + | 226 | 64 | 13 |

## Beispiel 3

Kombination der Ketonharz-Dispersion mit einem wasserverdünnbaren, isocyanatmodifizierten Fettsäurealkydharz (z. B. ®Alkydal F50W) zur Herstellung eines luft- und ofentrocknenden Industrielackes :

Das Alkydharz wurde mit Ammoniak neutralisiert und anschließend mit 10 und 20 % der nach Beispiel 1 hergestellten Ketonharz-Dispersion versetzt, wobei dann jeweils ein vordispergiertes pigmentiertes Gemisch (= Mischung I) mit einem vordispergierten Sikkativ-haltigen Gemisch (= Mischung II) kombiniert wurde. Untersucht wurde der Einfluß auf die Filmhärte, die Vergilbung und den Glanz. Die Zusammensetzung (in Teilen) der Lacke und die damit erhaltenen Ergebnisse sind in Tabelle 2 zusammengefaßt.

Tabelle 2

| | | | |
|---|---|---|---|
| **Mischung I** | | | |
| Alkydharz (55 % in Butylglykol) pH 9.5 | 71,8 | 64,2 | 57,1 |
| Ketonharz - Dispersion aus Beispiel 1 | - | 7,4 | 14,7 |
| Verlaufsmittel auf Silikonöl-Basis | 0,4 | 0,4 | 0,4 |
| Titandioxid, Rutil-Type | 94,5 | 94,5 | 94,5 |
| Wasser | 84 | 84 | 84 |
| | | | |
| **Mischung II** | | | |
| Alkydharz (55 % in Butylglykol) pH 9,5 | 100,5 | 90,5 | 80,5 |
| Ketonharz-Dispersion aus Beispiel 1 | - | 10,4 | 20,8 |
| ®Soligen Co Pb Mn 50 %ig | 1,9 | 1,75 | 1,5 |
| Wasser | 126 | 126 | 126 |
| | | | |
| **Prüfung** | | | |
| Filmhärte (Pendeldämpfung nach König) [sec] | | | |
| a) Trocknung 1 Stunde bei 50°C + 2 Tage bei Raumtemperatur | 59 | 62 | 65 |
| b) Trocknung 45 Minuten bei 120°C + 2 Tage bei Raumtemperatur | 81 | 84 | 84 |

**0 154 835**

Tableau 2 (Fortsetzung)

| Vergilbung (Benotung 0-6) | | | |
|---|---|---|---|
| a) Trocknung 1 Stunde bei 50°C + 2 Tage bei Raumtemperatur | 1 | 1 | 1-2 |
| b) Trocknung 45 Minuten bei 120°C + 2 Tage bei Raumtemperatur | 2 | 3 | 4 |
| Glanz (Multigloss 60° [%]) | | | |
| a) Trocknung 1 Stunde bei 50°C + 2 Tage bei Raumtemperatur | 89 | 94 | 96 |
| b) Trocknung 45 Minuten bei 120°C + 2 Tage bei Raumtemperatur | 89 | 89 | 94 |
| Wasserfestigkeit nach 3 Stunden bei Raumtemperatur | in Ordnung | in Ordnung | in Ordnung |

**Patentansprüche**

1. Verfahren zur Herstellung von stabilen wäßrigen Dispersionen von Keton-Harzen, dadurch gekennzeichnet, daß man die Harzschmelze oder 75 bis 95 %ige Lösungen von Keton-Harzen, die aus cycloaliphatischen Ketonen hergestellt wurden, in Gegenwart von organischen Schutzkolloiden, gegebenenfalls unter Zusatz von Emulgatoren in Wasser dispergiert.

2. Verfahren nach Anspruch 1, dadurch gekennzeichnet, daß als organische Schutzkolloide Copolymerisate aus Vinyllactamen und Vinylestern verwendet werden.

3. Verfahren nach Anspruch 1, dadurch gekennzeichnet, daß als organische Schutzkolloide carboxylgruppenhaltige (Meth)acrylsäureestercopolymerisate, deren Carboxylgruppen zumindest teilweise neutralisiert sind, verwendet werden.

4. Verfahren nach einem der Ansprüche 1 bis 3, dadurch gekennzeichnet, daß als Emulgatoren nichtionische Emulgatoren verwendet werden.

5. Verfahren nach Anspruch 4, dadurch gekennzeichnet, daß als nichtionische Emulgatoren oxethylierte Fettalkohole verwendet werden.

6. Verwendung der nach einem Verfahren gemäß einem der Ansprüche 1 bis 5 hergestellten wäßrigen Harzdispersionen in Kombination mit anderen Filmbildnern als Lackbindemittel.

7. Verwendung der nach einem Verfahren gemäß einem der Ansprüche 1 bis 5 hergestellten wäßrigen Harzdispersionen in Kombination mit wäßrigen Lösungen und/oder Dispersionen von Alkydharzen- und/oder Polymerisaten α,β-ethylenisch ungesättigter Verbindungen.

**Claims**

1. A process for the preparation of a stable aqueous dispersion of a ketone resin, wherein a melt or from 75 to 95 % strength solution of the ketone resin prepared from a cycloaliphatic ketone is dispersed in water in the presence of an organic protective colloid, with or without the addition of an emulsifier.

2. A process as claimed in claim 1, wherein the organic protective colloid used is a copolymer of a vinyllactam and a vinyl ester.

3. A process as claimed in claim 1, wherein the organic protective colloid used is a carboxyl-containing (meth)acrylate copolymer, some or all of whose carboxyl groups are neutralized.

4. A process as claimed in any of claims 1 to 3, wherein the emulsifier used is a nonionic emulsifier.

5. A process as claimed in claim 4, wherein the nonionic emulsifier used is an ethoxylated fatty alcohol.

6. Use of an aqueous resin dispersion prepared by a process as claimed in any of claims 1 to 5 combined with another film former, as surface coating binder.

7. Use of an aqueous resin dispersion prepared by a process as claimed in any of claims 1 to 5 combined with aqueous solutions and/or dispersions of alkyd resins and/or polymers of α,β-ethylenically unsaturated compounds.

**Revendications**

1. Procédé de préparation de dispersions aqueuses, stables, de résines cétoniques, caractérisé par

6

le fait que l'on disperse dans l'eau, éventuellement avec addition d'émulsifiants, en présence de colloïdes protecteurs organiques, les masses fondues ou les solutions à 75-95 % de résines cétoniques qui ont été préparées à partir de cétones cycloaliphatiques.

2. Procédé selon la revendication 1, caractérisé par le fait que l'on utilise comme colloïdes protecteurs des copolymérisats de lactames vinyliques et esters vinyliques.

3. Procédé selon la revendication 1, caractérisé par le fait que l'on utilise comme colloïdes protecteurs des copolymérisats d'esters d'acide (meth) acrylique à groupes carboxyle dont les groupes carboxyle sont neutralisés au moins partiellement.

4. Procédé selon la revendication 1 à 3, caractérisé par le fait que l'on utilise comme émulsifiants des émulsifiants non-ioniques.

5. Procédé selon la revendication 4 caractérisé par le fait que l'on utilise comme émulsifiants non-ioniques des alcools gras oxéthylés.

6. Utilisation comme liants pour peintures et vernis des dispersions de résines aqueuses, préparées par un procédé selon l'une des revendications 1 à 5, en combinaison avec d'autres filmogènes.

7. Utilisation comme liants pour peintures et vernis des dispersions de résines aqueuses, préparées par un procédé selon l'une des revendications 1 à 5 en combinaison avec des solutions et/ou dispersions aqueuses de résines alkydes et/ou polymérisats de composés à insaturation éthylénique en $\alpha,\beta$.